# EUROPÄISCHE PATENTANMELDUNG

(11) **EP 2 187 293 A2**
(43) Veröffentlichungstag der Anmeldung: **19.05.2010**
(21) Anmeldenummer: 09014050.0
(22) Anmeldetag: 10.11.2009
(51) Int. Cl.: G06F 3/041, G06F 3/02

(54) **Glastastatur mit Haptik**

(30) Priorität: 14.11.2008 DE 102008057477; 18.05.2009 DE 102009021821
(71) Anmelder: PrehKeyTec GmbH, 97638 Mellrichstadt (DE)
(72) Erfinder: Hochgesang, Gerhard, 97616 Bad Neustadt (DE); Schmöger, Klaus, 97616 Bad Neustadt (DE)
(74) Vertreter: Dietrich, Barbara

(57) **Zusammenfassung**

Vorgeschlagen wird eine Einrichtung (1) zur Eingabe von Daten und anderen Informationen mit einer insbesonderen Glastastatur (3), die in einem Gehäuse (2) der Einrichtung mittels einer Scherenmechanik, bestehend aus zwei Scherenhebel (4) beweglich gelagert ist, wobei Federn (5) in die Scherenmechanik eingebunden sind, die die Scherenhebel (4) nach einer Hubbewegung wieder in ihre Ausgangsposition überführen. Die Federn (5) bilden eine definierte Kraft-Weg-Kennlinie nach, wobei durch die einstellbare Federcharakteristik die Höhe des Hubs selbst bestimmt werden kann. Die Scherenhebel (4) sind zwischen zwei Systemträgern (6, 7) eingebunden, wobei der obere Systemträger (6) am Glas der Glastastatur (3) befestigt ist und eine Halteeinrichtung (8) für den unteren Systemträger (7) aufweist.

## Beschreibung

Die Erfindung betrifft eine Einrichtung insbesondere zur manuellen Eingabe von Daten mit einer in einem Gehäuse aufgenommenen Glastastatur, die im Gehäuse beweglich gelagert ist. Die Einrichtung kann durch weitere elektrische Systeme, nämlich separaten Kartenleser, optische Scanner etc. wie sie von POS- Tastaturen oder dergleichen bekannt sind, ergänzt werden.

Auf der Internetseite der WES Ebert Systeme Electronic GmbH (http://www.wes-electronic.de/produkte/tastatur/pdf/beleuchtete tastatur tb d.pdf) wird eine Glastastatur angeboten, die in Terminals, Tischplatten und Wänden einbaubar ist.

Eine Glastastatur ist des Weiteren aus der WO 00/72345 A1 bekannt. Diese zeichnet sich gegenüber anderen Glastastaturen dadurch aus, dass der Rand der Dünnglasscheiben mit einem ausgehärteten Kunststoff stabilisiert ist.

Trotz des Vorteils, dass derartige Glastastaturen leicht zu reinigen und unempfindlich auch im rauen Umfeld sind, besitzen sie den Nachteil, dass bei Benutzung der Bediener kein Feedback bezüglich der Eingabe selbst bekommt.

Der Erfindung stellt sich die Aufgabe, eine sichere und schnelle Dateneingabe mit Rückinformation auch bei Glastastaturen aufzuzeigen.

Gelöst wird die Aufgabe durch die Merklame des Anspruchs 1. Vorteilhafte Ausführungen sind in den Unteransprüchen aufgezeigt.

Der Erfindung liegt die Idee zugrunde, die Tastatur bzw. Tastaturplatte zum Erhalt einer haptischen Rückinformation durch eine Scherentechnik parallel zu führen.

Aus der DE 10 2005 025 301 A1 ist eine Eingabeeinrichtung bekannt, die einen berührungssensitiven Bildschirm aufweist, der beweglich im Gehäuse aufgenommen ist. Bereits hier wird der Grundgedanke, dass der Bediener nicht länger auf den Bildschirm schauen muss, um die Eingabe bestätigt zu bekommen, umgesetzt. Der Bediener erfährt die Bedienung unmittelbar über die Haptik des sich bewegenden Bildschirms. Die Bewegung des Bildschirms entspricht im Wesentlichen dem Hub einer Taste im Tastenfeld und wird bevorzugt durch eine Parallelführung unterstützt.

Ein mittels Scherenheber bewegliches Eingabemodul beschreibt die US 2004/0196268 A1. Diese bei 4 -fach Tasten bekannte und sogenannte Scherentechnik wird in der DE 195 36 071 C1 beschrieben. Ein weiteres Scherensystem gibt die DE 33 23 698 A1 wieder.

Dagegen unterscheidet sich die eigene Idee dadurch, dass die Scheren der Scherenmechanik mittels einer eingesetzten Federkraft immer wieder in die Ausgangsposition zurückgestellt werden. Die Scherentechnik ist zudem durch entsprechende Einrichtungen geschützt und somit auch im rauen Umfeld einsetzbar. Die Rückstellfedern können für / auf eine gewünschte Kraft-Weg-Kennlinie konzipiert werden. Das bedeutet im weitesten Sinn, dass ein weiches oder härteres Bedienen der Eingabevorrichtung auf die Bedienperson und damit individuell auf diese abstimmbar ist. Damit wird die Reproduzierbarkeit eines bestimmten Hubes für die entsprechende Bedienperson möglich. Ob diese Abstimmung dabei durch Auswechseln der Federn vor Ort oder durch den Einsatz von Federn mit veränderlicher Federcharakteristik erfolgt, sei dahingestellt, da für den Fachmann ohne Weiteres ausführbar.

Des Weiteren werden wenigstens zwei Systemträger verwendet, zwischen denen die Scheren eingebunden sind, wobei der obere Systemträger die Tastatur trägt und der untere Systemträger zur Beabstandung des oberen Systemträgers mit Glastastatur vom Gehäuseboden dient. Die vorgesehene Scherenmechanik ermöglicht das parallele Absenken der Glastastatur.

Die Glastastatur liegt zusammen mit dem Tastenlayout und der Auswerteelektronik sowie der Befestigung auf dem ersten, oberen Systemträger, der seinerseits am Glas der Tastatur befestigt sein sollte. Im / am ersten Systemträger ist die Scherenmechanik eingebunden / gelagert. Des Weiteren trägt der erste Systemträger eine Halterung für den zweiten, unteren Systemträger. Auf dem unteren Systemträger sind die Federn positioniert, die eine definierte Kraft-Weg-Kennlinie sicher stellen. Abgestützt werden diese Federn an den Scherenhebeln. Das ermöglicht ein leichtes Wechseln der Federn auch im montierten Zustand.
Die Systemträgereinheit ist symmetrisch und wird auf Umschlag am Glas und in einer, die Glastastatur ausnehmenden Gehäuseschale befestigt.

Die Glastastatur als vormontiertes Modul weist unter der Glasrückseite umlaufend eine Abdichtung aus elastischem Material auf, sodass bei Einbau in einem Gehäuse bzw. die Gehäuseschale oder einer Blende der komplette Aufbau geschützt ist, was zudem eine glatte Oberfläche der Tastatur mit Haptik schafft.

Eine Sperrung des Hubs kann durch eine zusätzliche Hebelmechanik (elektronisch, elektromechanisch) im Gehäuse erfolgen, die ihrerseits das Verstellen des oberen Trägers zum unteren Träger verhindert.

Obwohl die Anwendung der bekannten Scherentechnik bei der Masse der Glastastatur gegenüber der Masse eines kleineren Eingabemoduls oder einer Taste als nicht anwendbar bzw. nutzbar erschien, wurde mit diesem Konzept eine einfache Umsetzung für eine haptische Rückinformation bei der Betätigung der Eingabe auf der Glastastatur aufgezeigt, die sich der Vorteile der Scherentechnik (parallele Führung) bedient. Bei der Glastastatur kann es sich um eine kapazitive bzw. sensitive Glastastatur handeln. Es versteht sich, dass die Konstruktion auch für andere Tastaturen anwendbar ist, die ihrerseits eine relativ hohe Masse aufweisen.

Anhand eines Ausführungsbeispiels mit Zeichnung soll die Erfindung näher erläutert werden. Es zeigt:
- Fig. 1: eine Schnittdarstellung einer erfindungsgemäßen Glastastatur in einem Gehäuse,
- Fig. 2: die Glastastatur mit Gehäuse aus Fig. 1 in einer Seitenansicht,
- Fig. 3: die Glastastatur aus Fig. 1 und Fig. 2 in einer Draufsicht.

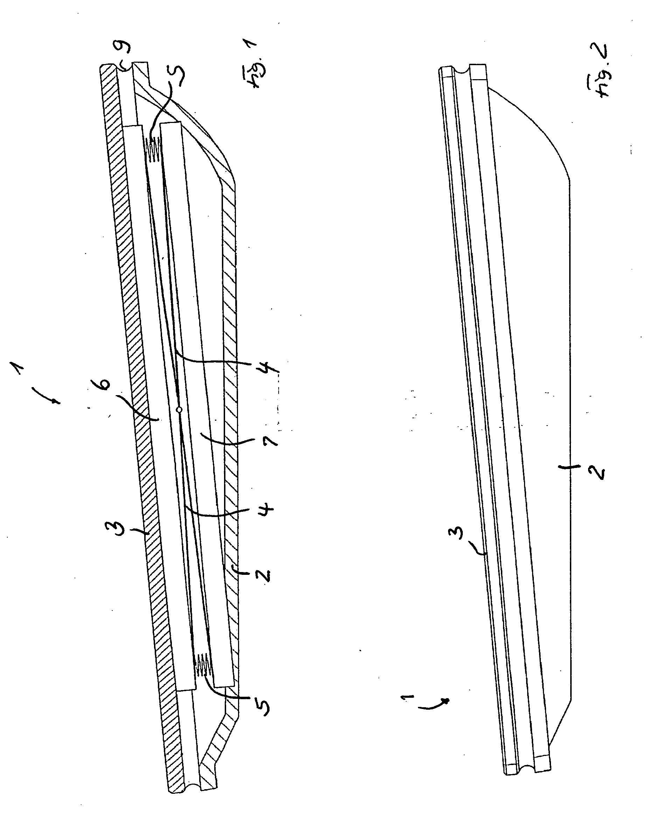

In Fig. 1 ist mit 1 eine Eingabevorrichtung (Einrichtung) zur (manuellen) Eingabe von Daten etc. aufgezeigt. Die Eingabevorrichtung 1 besitzt ein Gehäuse 2, das hier schalenförmig ausgeführt ist. In dem Gehäuse 2 ist eine Glastastatur 3 (mit Elektronik) eingebunden, die mittels einer Scherenmechanik, bestehend aus zwei Scherenhebel 4, im Gehäuse 2 bewegbar gehalten wird. Die Scherenhebel 4 ermöglichen das parallele Führen der Glastastatur 3 innerhalb des Gehäuses 2, sodass es weder zu einer schwimmenden noch sich verkantenden Lagerung der Glastastatur 3 kommen kann. Selbst eine außermittige Betätigung bewirkt dabei stets einen gleichmäßigen Hub der gesamten Tastatur 3.

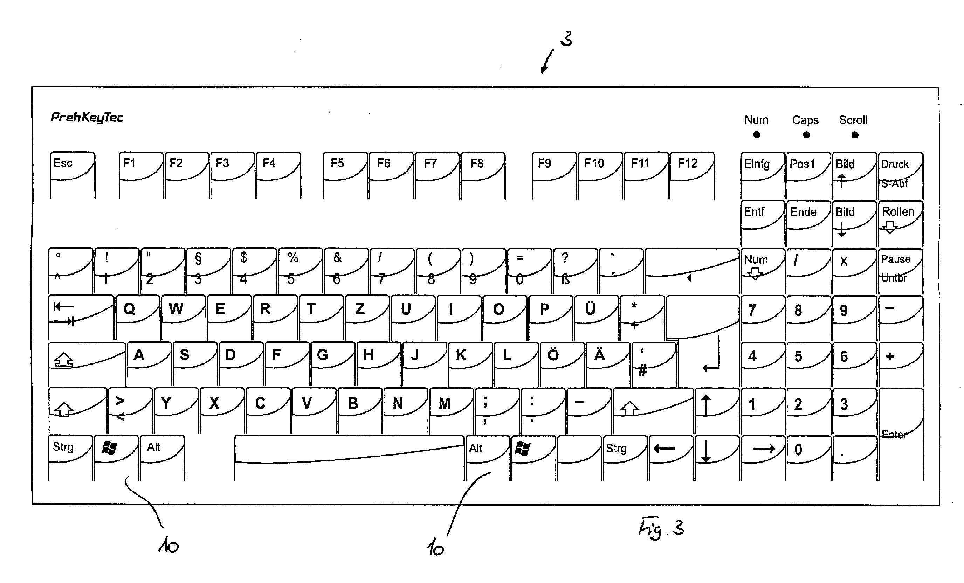

Zur Schaffung einer haptischen Rückinformation beim Drücken auf Bedientasten 10 (Fig. 3) der Glastatstur 3 und zur Rückstellung der Glastastatur 3 in eine Ausgangsposition sind Federn 5 vorgesehen. Diese stellen eine definierte Kraft-Weg-Kennlinie sicher, wodurch nicht nur das Wegtauchen bzw. der Hub der Glastastatur 3 sondern auch die Rückstellgeschwindigkeit bestimmt werden. Die Federn 5 können somit gleichzeitig dazu genutzt werden, den Hub in seiner Höhe selbst und damit die Stellgröße der Haptik zu definieren (geringerer Hub, größerer Hub).

Die Scherenhebel 4 sind zwischen zwei Systemträgern 6, 7 eingebunden, wobei der obere Systemträger 6 am Glas der Glastastatur 3 befestigt ist und Halteeinrichtung 8 für den unteren Systemträger 7 aufweist. Die Federn 5 sind bevorzugt auf dem unteren Systemträger 7 so positioniert, dass die Federn 5 auswechselbar sind, wobei sich die Federn 5 bevorzugt an den Scherenhebel 4 abstützen. Eine umlaufende Abdichtung 9 aus elastischem Material schützt den kompletten Aufbau der Tastatur 3 im Gehäuse 2 und kann als Halterung der Glastastatur 3 im Gehäuse 2 selbst dienen. Dazu kann sich die Abdichtung 9 am Gehäuse 2 abstützen oder in einer entsprechenden Nut (nicht näher dargestellt) eingreifend verankert werden.

Alternativ kann der untere Systemträger 7 durch das Gehäuse 2 selbst gebildet sein.

Alle Systemträger 6, 7 weisen bevorzugt, jedoch nicht notgedrungen, die gleiche Form auf und können auch auf Umschlag eingesetzt sein.

Für eine pultförmige Ausführung der Eingabevorrichtung 1 (Glastastatur 3 und Gehäuse 2) schließt das Gehäuse 2 mit der (unteren) Gehäuseschale plan mit einer imaginären Aufstellfläche ab. In diesem Fall ist vorgesehen, dass die Glastastatur 3 im Gehäuse 2 schräg gelagert ist. Diese Lagerung wird durch eine schräge Anordnung der beiden Systemträger 6, 7 im Gehäuse 2 unterstützt.

Fig. 2 zeigt die Eingabevorrichtung 1 in einer Seitendarstellung. Zu erkennen ist eine sehr flache Ausführung der Eingabevorrichtung 1 in einer pultförmigen Ausführung.

Fig. 3 widerspiegelt die Glastastatur 3 mit der in bekannten Art und Weise eingebundenen Elektronik in einer Draufsicht. Mit 10 sind diverse in der Glastastatur 3 eingebundene Bedientasten gekennzeichnet.

## Patentansprüche

1. Einrichtung (1) zur Eingabe von Daten und anderen Informationen mit einer insbesondere Glastastatur (3), die in einem Gehäuse (2) der Einrichtung mittels einer Scherenmechanik, bestehend aus zwei Scherenhebel (4) beweglich gelagert ist, wobei Federn (5) in die Scherenmechanik eingebunden sind, die die Scherenhebel (4) nach einer Hubbewegung wieder in ihre Ausgangsposition überführen.

2. Einrichtung nach Anspruch 1, **dadurch gekennzeichnet, dass** die Federn (5) eine definierte Kraft-Weg-Kennlinie nachbilden.

3. Einrichtung nach Anspruch 1 oder 2, **dadurch gekennzeichnet, dass** durch die einstellbare Federcharakteristik die Höhe des Hubs bestimmt werden kann.

4. Einrichtung nach einem der Ansprüche 1 bis 3, **dadurch gekennzeichnet, dass** die Scherenhebel (4) zwischen zwei Systemträgern (6, 7) eingebunden sind.

5. Einrichtung nach einem der Ansprüche 1 bis 4, **dadurch gekennzeichnet, dass** der obere Systemträger (6) am Glas der Glastastatur (3) befestigt ist und eine Halteeinrichtung (8) für den unteren Systemträger (7) aufweist.

6. Einrichtung nach einem der Ansprüche 1 bis 5, **dadurch gekennzeichnet, dass** die Federn (5) bevorzugt auf dem unteren Systemträger (7) so positioniert sind, dass die Federn (5) auswechselbar sind, wobei sich die Federn (5) vorzugsweise an den Scherenhebel (4) abstützen.

7. Einrichtung nach einem der Ansprüche 1 bis 6, **dadurch gekennzeichnet, dass** eine umlaufende Abdichtung (9) aus elastischem Material vorgesehen ist, die die Glastastatur (3) im Gehäuse (2) schützt.

8. Einrichtung nach Anspruch 7, **dadurch gekennzeichnet, dass** die Abdichtung (9) als Halterung der Glastastatur (3) im Gehäuse (2) dient.

9. Einrichtung nach Anspruch 8, **dadurch gekennzeichnet, dass** Abdichtung (9) sich am Gehäuse (2) abstützt oder in einer entsprechenden Nut im Gehäuse (2) eingreifend verankert ist.

10. Einrichtung nach einem der Ansprüche 1 bis 9, **dadurch gekennzeichnet, dass** für eine pultförmige Ausführung das Gehäuse (2) mit der unteren Gehäuseschale plan mit einer imaginären Aufstellfläche abschließt, während die Glastastatur (3) im Gehäuse (2) schräg gelagert ist, wobei diese Lagerung durch eine schräge Anordnung der beiden Systemträger (6, 7) im Gehäuse (2) unterstützt wird.

11. Einrichtung nach einem der Ansprüche 4 bis 10, **dadurch gekennzeichnet, dass** alle Systemträger (6, 7) die gleiche Form haben können und nur auf Umschlag eingesetzt sind.

12. Einrichtung nach einem der Ansprüche 4 bis 11, **dadurch gekennzeichnet, dass** der untere Systemträger (7) das Gehäuse (2) ist.

13. Einrichtung nach einem der Ansprüche 1 bis 12, **dadurch gekennzeichnet, dass** eine Sperrung, Verriegelung etc. des Hubs durch eine zusätzliche Hebelmechanik, elektronisch, elektromechanisch, im Gehäuse (2) erfolgen kann.
